# EUROPEAN PATENT SPECIFICATION

(11) **EP 0 892 820 B1**
(45) Date of publication and mention of the grant of the patent: **20.09.2000**
(21) Application number: 97917048.7
(22) Date of filing: 26.03.1997
(51) Int. Cl.: C08F 279/02

(54) **SIMPLIFIED BIMODAL PROCESS**
VEREINFACHTER BIMODALER PROZESS
PROCEDE BIMODAL SIMPLIFIE

(30) Priority: 12.04.1996 US 15316
(43) Date of publication of application: 27.01.1999
(73) Proprietor: THE DOW CHEMICAL COMPANY, Midland, Michigan 48674 (US)
(72) Inventor: BLACK, Steven, M., Midland, MI 48640 (US); SODERQUIST, Mark, E., Midland, MI 48642 (US); SCHRADER, David, Midland, MI 48642 (US)
(74) Representative: Raynor, John
(86) International application number: US9704989
(87) International publication number: WO9739040

(56) References cited:
- EP-A- 0 015 752
- EP-A- 0 096 447
- EP-A- 0 412 801
- EP-A- 0 620 236

## Description

The present invention relates to a process for preparing rubber modified polymers from vinyl aromatic monomers, particularly polymers containing two distinct volume average particle sizes, herein referred to as bimodal compositions.

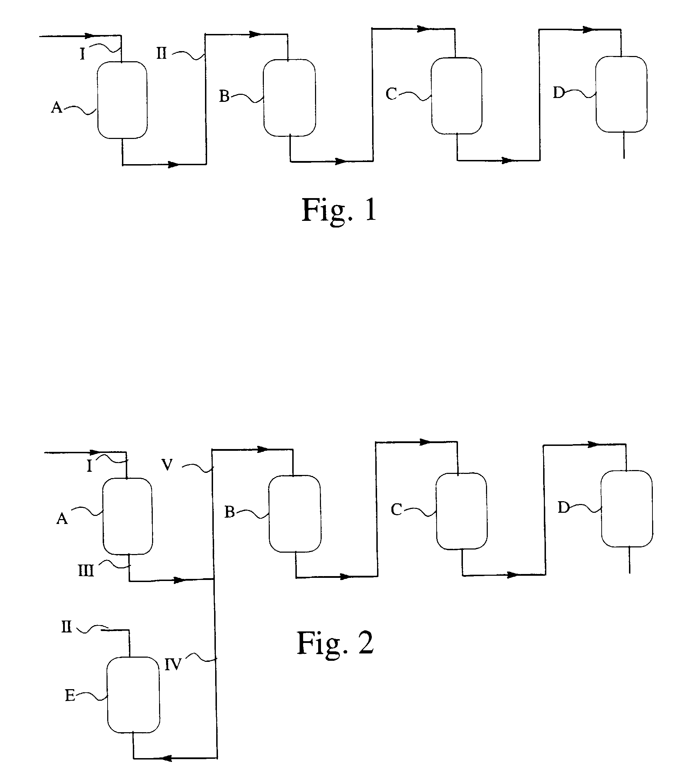

Rubber modified polymers have typically been prepared from vinyl aromatic monomers by polymerizing the vinyl aromatic monomer in the presence of a dissolved rubber. As depicted in Figure 1, the monomer and dissolved rubber are introduced by a feed line (I) into reactor A, wherein the vinyl aromatic monomer polymerizes forming a discontinuous phase dispersed throughout a continuous phase of dissolved rubber in monomer. As the vinyl aromatic monomer continues to polymerize, the discontinuous polymer phase becomes larger in volume thus forming a continuous phase, while the rubber forms a discontinuous phase dispersed throughout. This phenomenon, referred to as "phase inversion", is, therefore, the conversion of the polymer from a discontinuous phase dispersed in the continuous phase of the rubber/monomer solution, through the point where there is no distinct continuous or discontinuous phase in the polymerization mixture, to a continuous polymer phase having the rubber dispersed throughout. Phase inversion typically occurs in the bottom portion of reactor A.

Bimodal compositions are known to have better property balance between gloss and impact strength than monomodal compositions. Polymers having bimodal distributions can currently be produced in several ways including compounding and continuous polymerization processes.

Compounding is achieved by producing two separate rubber modified polymers, each having a desired rubber particle size, and blending the two resins to achieve a bimodal product. However, this process requires additional equipment which adds cost and reduces efficiency.

Bimodal compositions can also be prepared in a continuous polymerization process such as that disclosed in U.S. Patent No. 5,240,993 which is depicted in Figure 2. This process uses two reactors (A and E), wherein each reactor is used to form a mixture of rubber particles within a partially polymerized continuous phase, wherein one mixture contains large particles while the other mixture contains small particles. The two partially polymerized mixtures are then combined in feed line V and further polymerized in yet another reactor (B). This process configuration allows for variations in the two different rubber particle sizes and the production of highly occluded particles. However, the use of another reactor is required.

Other continuous polymerization processes can be used to produce bimodal compositions, including that disclosed in EP-0096447, which can be depicted as in Figure 3. In this process, two feeds (I and III) are added in two different reactors (A and B) within the polymerization process to generate a bimodal rubber particle size distribution. Feed I comprises a vinyl aromatic monomer and rubber while feed III can be the same as feed I, or a partial polymerizate comprising polymerized vinyl aromatic monomer having rubber particles dispersed therethrough. However, if feed III comprises vinyl aromatic monomer and rubber, the particle size produced is difficult to control, thus producing a rubber modified polymer having a broad particle size distribution. If feed III is a partial polymerizate, then an additional reactor would be required for its production. Additionally, this process is limited in its ability to vary the rubber particle size and obtain highly occluded particles.

Therefore, it would be desirable to develop a process for producing a rubber modified polymer composition from a vinyl aromatic monomer, particularly a bimodal composition, which produces compositions having controlled particle size and has the ability to obtain highly occluded particles without requiring an additional reactor.

One aspect of the present invention is a continuous process for the production of a rubber-reinforced polymer composition comprising:
continuously polymerizing a vinyl aromatic monomer containing a dissolved rubber to a conversion of from 2 to 70%, in a substantially plug flow reactor to produce a first prepolymer composition containing rubber particles,
continuously introducing a second prepolymer composition containing rubber particles into the substantially plug flow reactor such that the second prepolymer composition and the first prepolymer composition are mixed thus forming a third prepolymer composition, and further polymerizing the third prepolymer composition, to produce a rubber-reinforced polymer composition.

A second aspect of the present invention is a continuous process for the production of a rubber-reinforced polymer composition having a bimodal particle size distribution comprising:
continuously polymerizing a vinyl aromatic monomer containing a dissolved rubber to a conversion of from 2 to 70%, in a substantially plug flow reactor to produce a first prepolymer composition containing rubber particles,
continuously introducing a second prepolymer composition containing rubber particles into the substantially plug flow reactor such that the second prepolymer composition and the first prepolymer composition are mixed thus forming a third prepolymer composition,
wherein one of the prepolymer compositions contains small rubber particles having a volume average particle size of from 0.05 to 1.5 micrometers, and the other prepolymer composition contains large rubber particles having a volume average particle size of from 0.7 to 10 micrometers, with the proviso that the volume average particle size of the large rubber particles is at least 1.3 times the volume average particle size of the small rubber particles,
and further polymerizing the third prepolymer composition, to produce a rubber-reinforced polymer composition.

This process utilizes a single reactor to produce a prepolymer composition having rubber particles of a controlled size and to combine the prepolymer composition with a second prepolymer composition containing rubber particles. This process allows the production of rubber-reinforced polymers, particularly bimodal compositions, having a good balance of gloss, impact strength, controlled particle sizes and highly occluded particles without the use of an additional reactor.

Fig. 1 of the drawings generally represents schematically a conventional process and apparatus for the production of high impact polystyrene (HIPS) or acrylonitrile-butadiene-styrene copolymers (ABS).

Fig. 2 of the drawings generally illustrates schematically an apparatus and process as disclosed in U.S. Patent No. 5,240,993.

Fig. 3 of the drawings generally illustrates schematically an apparatus and process as disclosed in EP-0096447.

Fig. 4 of the drawings generally illustrates schematically a preferred embodiment of an apparatus and process in accordance with the present invention.

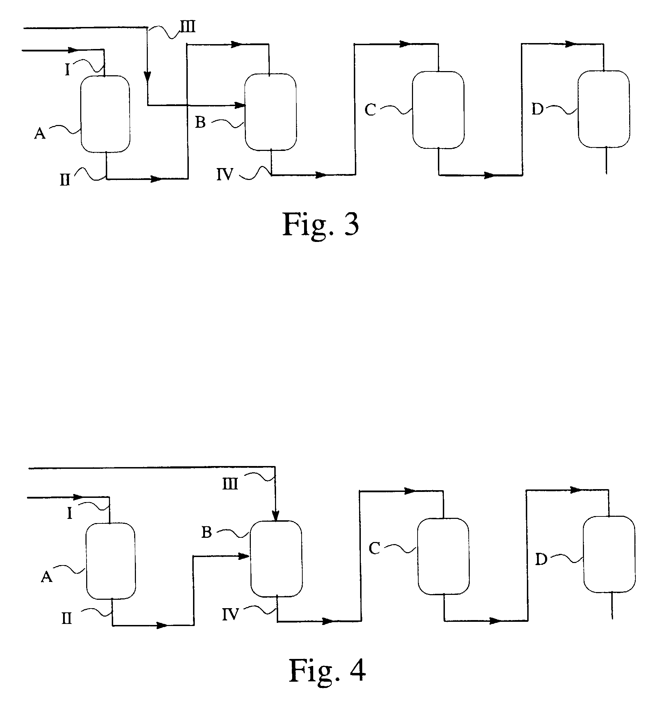

The process of the present invention is a process for producing rubber modified polymers from vinyl aromatic monomers, a representative process of which is depicted in Figure 4. A feed (III) of vinyl aromatic monomer and dissolved rubber is introduced into the top of a substantially plug flow reactor(B) and the vinyl aromatic monomer is polymerized such that phase inversion occurs and rubber particles are formed in a zone of the reactor. The resultant mixture of polymerized vinyl aromatic monomer, rubber particles and vinyl aromatic monomer is referred to as a first prepolymer composition. Another feed of vinyl aromatic monomer and dissolved rubber (I) is introduced into a separate substantially plug flow reactor (A) and the vinyl aromatic monomer is polymerized such that phase inversion has occurred before exiting reactor A via line II, thus forming a second prepolymer composition. The second prepolymer composition in line II is introduced into reactor B at a point at which the first prepolymer composition has been formed and the two prepolymer compositions are mixed within reactor B to form a third prepolymer composition. The third prepolymer composition is further polymerized in reactor B and throughout subsequent reactors if desired.

The rubber-reinforced polymers produced by the process of the present invention are derived from one or more vinyl aromatic monomers. Representative vinyl aromatic monomers include styrene, alkyl substituted styrenes such as alpha-alkyl-styrenes, for example, alphamethylstyrene, alpha-ethylstyrene; ring substituted styrenes, for example, vinyltoluene, particularly p-vinyltoluene, o-ethylstyrene and 2,4-dimethylstyrene; ring substituted halo-styrenes such as chlorostyrene, and 2,4-dichloro-styrene; styrene substituted with both halo and alkyl groups, such as 2-chloro-4-methylstyrene, vinyl anthracene; and mixtures thereof. Preferably styrene and/or alpha-methyl-styrene is used as the vinyl aromatic monomer, with styrene being most preferred.

Comonomers may also be used in combination with the vinyl aromatic monomer, preferably in an amount of up to 40 percent by weight of the polymerizable monomer mixture. Representative comonomers include unsaturated nitriles, such as acrylonitrile; alkyl acrylates and alkyl methacrylates such as methyl methacrylate or n-butylacrylate; ethylenically unsaturated carboxylic acids; and ethylenically unsaturated carboxylic acid derivatives including anhydrides and imides, such as maleic anhydride and N-phenyl maleimide.

The rubber may be any rubbery polymer which can be dissolved in the vinyl aromatic monomer. Typically, the rubbery polymer employed in the preparation of the dispersed rubber particles exhibits a second order transition temperature not higher than 0 °C, and preferably not higher than -20 °C. Preferred rubbery polymers include a homopolymer or copolymer of an alkadiene or a ethylene-propylene copolymer optionally containing a non-conjugated diene. More preferably, the rubber is a homopolymer of a 1,3-conjugated diene such as butadiene, isoprene, piperylene, and chloroprene, or a copolymer of a conjugated diene with one or more vinyl aromatic monomers such as styrene; alpha, beta-ethylenically unsaturated nitriles such as acrylonitrile; and alpha-olefins such as ethylene or propylene. Most preferred rubbers are homopolymers of 1,3-butadiene and block or random copolymers of at least 30, more preferably from 50 to 90, weight percent 1,3-butadiene and up to 70, more preferably from 5 to 50, weight percent of a vinyl aromatic compound, preferably styrene. The rubber utilized to produce large rubber particles is preferably a polybutadiene. The rubber utilized to produce small rubber particles is preferably a polybutadiene or a poly(butadiene-styrene)block copolymer.

The amount of rubber initially dissolved in the vinyl aromatic monomer is dependent on the desired concentration of the rubber in the final rubber-reinforced polymer product, the degree of conversion during polymerization and the viscosity of the solution. The rubber is typically used in amounts such that the rubber-reinforced polymer product contains from 2 to 20 percent, preferably from 3 to 17 percent, and more preferably from 3 to 15 weight percent rubber, based on the total weight of the vinyl aromatic monomer and rubber components, expressed as rubber or rubber equivalent. The term "rubber or "rubber equivalent" as used herein is intended to mean, for a rubber homopolymer, such as polybutadiene, simply the amount of rubber, and for a block copolymer, the amount of the copolymer made up from monomer which when homopolymerized forms a rubbery polymer, such as for a butadienestyrene block copolymer, the amount of the butadiene component of the block copolymer.

The polymerization can be conducted in the presence of an initiator. Suitable initiators include any initiator capable of imparting the desired grafting of polymer to the rubber particle under the conditions of polymerization and accelerating the polymerization of the vinyl aromatic monomer. Representative initiators include peroxide initiators such as peresters, for example, tertiary butyl peroxybenzoate and tertiary butyl peroxyacetate, dibenzoyl peroxide, dilauroyl peroxide, 1.1-bis tertiarybutyl peroxycyclohexane, 1-3-bis tertiarybutylperoxy-3,3,5-trimethyl cyclohexane, and di-cumyl peroxide. Photochemical initiation techniques can be employed if desired. Preferred initiators include dibenzoyl peroxide, tertiarybutylperoxy benzoate, 1,1-bistertiarybutylperoxy cyclohexane and tertiarybutylperoxy acetate.

Initiators may be employed in a range of concentrations dependent on a variety of factors including the specific initiators employed, the desired levels of polymer grafting and the conditions at which the mass polymerization is conducted. Specifically, initiators may be employed in amounts from 0 to 2000, preferably from 100 to 1500, parts by weight per million parts by weight of vinyl aromatic monomer.

Additionally, a solvent may be used in the process of the present invention. Acceptable solvents include normally liquid organic materials which form a solution with the rubber, vinyl aromatic monomer and the polymer prepared therefrom. Representative solvents include aromatic and substituted aromatic hydrocarbons such as benzene, ethylbenzene, toluene, or xylene; substituted or unsubstituted, straight or branched chain saturated aliphatics of 5 or more carbon atoms, such as heptane, hexane, or octane; alicyclic or substituted alicyclic hydrocarbons having 5 or 6 carbon atoms, such as cyclohexane. Preferred solvents include substituted aromatics, with ethylbenzene and xylene being most preferred. In general, the solvent is employed in amounts sufficient to improve the processability and heat transfer during polymerization. Such amounts will vary depending on the rubber, monomer and solvent employed, the process equipment and the desired degree of polymerization. If employed, the solvent is generally employed in an amount of up to 35 weight percent, preferably from 2 to 25 weight percent, based on the total weight of the solution.

Other materials may also be present in the process of the present invention, including plasticizers, for example, mineral oil; flow promoters, lubricants, antioxidants, catalysts, mold release agents, or polymerization aids such as chain transfer agents, including alkyl mercaptans, for example, n-dodecyl mercaptan. If employed, a chain transfer agent can be present in an amount of from 0.001 to 0.5 weight percent based on the total weight of the polymerization mixture to which it is added.

The polymerization is preferably conducted in one or more substantially linear stratified flow or so-called plug-flow type reactors, as described in U.S. Pat. No. 2,727,884. Advantageously, the process according to the present invention can be practiced by modifying existing standard mass polymerization process equipment not otherwise capable of the preparation of bimodal rubber reinforced compositions, without the need for an additional reactor.

The feed used to form the first prepolymer composition is typically prepared by dissolving the rubber in the vinyl aromatic monomer. The feed is then introduced into a reactor and the vinyl aromatic monomer is polymerized to a conversion of from 2 to 70 percent, preferably from 5 to 65 percent, more preferably from 10 to 55 percent, and most preferably from 10 to 50 percent. The rubber particle becomes grafted with the vinyl aromatic monomer which aids its dispersion and stabilizes the morphology of the particle. Preferably, the polymerization is conducted such that phase inversion has occurred and rubber particles of a desired size have been produced within the first prepolymer composition before it is combined with the second prepolymer composition.

The second prepolymer composition is typically prepared by a similar process as described for the first prepolymer composition. The vinyl aromatic monomer is typically polymerized to a conversion from 2 to 70 percent, preferably from 5 to 65 percent, more preferably from 10 to 55 percent, and most preferably from 10 to 50 percent. Preferably, phase inversion has occurred, thus producing rubber particles of a desired size, before being combined with the first prepolymer composition. The rubber and vinyl aromatic monomer are as described previously.

The particle size of the rubber particles produced in the first and second prepolymer compositions can be influenced by a number of factors including the rubber used, the amount of grafting, the viscosity and the shear rate. The techniques of mass-polymerization and the conditions needed for producing the desired average particle sizes are well known to one skilled in the art.

The process of the present invention can be advantageously used to produce both monomodal and bimodal compositions, that is compositions containing one or two distinct volume average particle sizes. In monomodal compositions, both prepolymer compositions would produce particles of approximately the same volume average particle size. Typically, these sizes can vary from 0.05 to 10 micrometers, preferably from 0.1 to 8 micrometers, more preferably from 0.5 to 6 micrometers and most preferably from 1 to 5 micrometers.

In bimodal compositions, two distinct volume average particle sizes are produced and combined. In particular, the rubber particles of the first and second prepolymer compositions have different volume average particle sizes, wherein one contains small rubber particles having a volume average particle size of from 0.05 to 1.5 micrometers, and the other contains large rubber particles having a volume average particle size of from 0.7 to 10 micrometers, wherein the volume average particle size of the large rubber particles is at least 1.3 times the volume average particle size of the small rubber particles. Preferably, the volume average particle size of the large rubber paticles are at least 1.5 times, more preferably 1.8 times and most preferably 2.0 times the volume average particle size of the small rubber particles.

The small or large rubber particles of the bimodal composition may be present in either the first or the second prepolymer compositions, with the stipulation that if the small particles are present in the first prepolymer composition, then the large particles are present in the second prepolymer composition and vice versa. Preferably, the small rubber particles are present in the second prepolymer composition and the large rubber particles are present in the first prepolymer composition.

In bimodal compositions, the desired ratio of the small to large particles is dependent upon the properties desired in the final rubber-reinforced polymer. Typically the amount of small particles ranges from 65 to 95, preferably from 75 to 90, and most preferably from 80 to 90 percent of the total amount of rubber particles in the rubber-reinforced polymer. For products which require high gloss properties, the amount of small particles is from 85 to 98 percent and the amount of large particles is 2 to 15 percent. Other polymers in which higher impact strength is desirable can have 65 to 75 percent small particles and 25 to 35 percent large particles.

As used herein, the volume average particle size refers to the diameter of the rubber particles, including all occlusions of vinyl aromatic polymer within the rubber particles. Volume average particle sizes and distributions may be measured using conventional techniques such as a Coulter Counter™ or, transmission electron microscopy image analysis.

The small rubber particles typically have a core-shell (single, major occlusion), cellular (multiple, minor occlusions) or labyrinth morphology. The large particles typically have a cellular or similar multiple-occlusion morphology.

After phase inversion has occurred the second prepolymer composition is added to the first prepolymer composition and the two compositions are mixed in a desired ratio such that a third prepolymer composition is obtained.

It is preferable that the conversion of vinyl aromatic monomer within the first and second prepolymer compositions be similar or that the first composition be slightly higher than the second in order to prevent phase reinversion. However, it is also within the scope of the present invention for the first composition to be at a lower conversion than the second composition.

The third prepolymer mixture is then further polymerized to a desired vinyl aromatic monomer conversion. Typically, the third prepolymer mixture is polymerized to a conversion of from 50 to 70 percent and can be further reacted to a conversion of 80 to 90 percent.

The temperature at which the polymerizations are conducted will vary according to the specific components, particularly initiator, but will generally vary from 60 to 190°C.

Crosslinking of the rubber in the resulting product and removal of the unreacted monomers, as well as any solvent, if employed, and other volatile materials is advantageously conducted employing conventional techniques, such as introducing the polymerization mixture into a devolatilizer, flashing off the monomer and other volatiles at elevated temperature, for example, from 200 to 300°C under vacuum and removing them from the devolatilizer.

In one embodiment of the present invention, the process is used for the preparation of a HIPS composition comprising a polymerized vinyl aromatic monomer, with dispersed particles of rubber. The size of the rubber particles are dependent upon the desired gloss and impact properties of the polymer product. For bimodal HIPS compositions the small rubber particles are typically in the range of from 0.1 to 1 micrometer, preferably from 0.1 to 0.9, more preferably from 0.2 to 0.8 and most preferably from 0.2 to 0.7 micrometers, and the large rubber particles are typically from 1 to 6, preferably from 1 to 5.5, more preferably from 1.5 to 5.5 and most preferably from 1.5 to 5 micrometers.

Alternatively, the process may be utilized in the preparation of ABS type compositions, in which an alkenyl nitrile, generally acrylonitrile is used as a comonomer. For bimodal ABS compositions the small particles are typically in the range of from 0.2 to 1, preferably from 0.3 to 1, more preferably from 0.4 to 0.9 and most preferably from 0.5 to 0.8 micrometers and the large rubber particles are typically from 0.8 to 10, preferably from 0.9 to 8, more preferably from 1 to 7 and most preferably from 1 to 5 micrometers.

Due to the excellent balance of gloss and toughness properties, these rubber-reinforced compositions, particularly bimodal compositions, are useful in a wide variety of applications such as consumer electronics, small household appliances, toys and furniture. These polymers are also useful in extrusion applications such as in the preparation of a gloss layer using coextrusion techniques for refrigerator liners.

The following examples are provided to illustrate the present invention. The examples are not intended to limit the scope of the present invention and they should not be so interpreted. Amounts are in parts by weight unless otherwise indicated.

### EXAMPLE 1

Figure 4 is representative of the apparatus used and is referred to in the following examples.

### Preparation of the First Prepolymer Composition

A feed (III) of the following components is continuously charged at a rate of 1.74 kg/hr into the top of the first zone of a substantially plug flow stirred tube reactor (B), having three temperature control zones, the first being set at 125°C, the second at 140°C, and the third at 148°C, and equipped with a variable speed agitator set at an agitation rate of 50 rpm.

| | |
|---|---|
| 3.8 wt.% | polybutadiene (about 35% 1,4 cis, about 55% 1,4 trans and about 10% 1.2 vinyl) |
| 88.2 wt.% | styrene |
| 5.6 wt.% | ethylbenzene |
| 2.4 wt.% | mineral oil |

Additional ethylbenzene is added to the top of the first zone of reactor B at a rate of 80 gm/hr.

The mixture is polymerized such that the prepolymer solution has about a 31 percent conversion at the end of the first zone.

### Preparation of the Second Prepolymer Composition

A feed (I) of the following components is continuously charged at a rate of 8.17 kg/hr into the top of a first zone of a substantially plug flow stirred tube reactor (A), having three temperature control zones, the first zone being set at a temperature of 114°C, the second at 119°C and the third at 123°C, and equipped with a variable speed agitator set at an agitation rate of 50 rpm.

| | |
|---|---|
| 10.3 wt.% | 70/30 butadiene styrene block copolymer rubber |
| 79.05 wt.% | styrene |
| 8.2 wt.% | ethylbenzene |
| 2.4 wt.% | mineral oil |

403 ppm, based on the total weight of the composition, of 1,1-di(t-butylperoxy)cyclohexane) is added to the feed at a rate of 26 gm/hr and the mixture is polymerized sequentially in zones 1, 2 and 3 such that the prepolymer composition exiting reactor A via line II has about a 50 percent conversion.

The first and second prepolymer compositions are combined in the second zone of reactor B and polymerization is continued through reactor B and a third reactor, (C) which has three temperature control zones, zone one being set at 153°C, zone two at 157°C and zone three at 162°C, until solids reach approximately 65 to 70 percent. The polymer stream is then devolatilized in D in two stages at 184°C, 850 mm Hg and at 246°C, 21 mm Hg. The product is a bimodal HIPS composition having about 90/10 weight ratio of small to large rubber particles, wherein the large particles have a volume average particle size of about 1.3 micrometers and the small particles have a volume average particle size of about 0.3 micrometers.

A bimodal composition is prepared using a single reactor to produce a prepolymer composition having rubber particles of a volume average particle size of about 1.3 micrometers, and to combine the prepolymer composition with a second prepolymer composition containing rubber particles having a volume average particle size of about 0.3 micrometers.

### EXAMPLE 2

The same procedure of Example 1 is followed except the monomer-rubber feed stream (III) composition consists of

| | |
|---|---|
| 3.8 wt.% | polybutadiene (about 35% 1,4 cis, about 55% 1,4 trans and about 10% 1.2 vinyl) |
| 88.2 wt.% | styrene |
| 5.6 wt.% | ethylbenzene |
| 2.4 wt.% | mineral oil |

An additional feed of 99.66 wt.% ethylbenzene and 0.34 wt.% n-dodecylmercaptan is added to the top of the first zone of reactor B at a rate of 80 gm/hr.

The product is a bimodal HIPS composition having about 90/10 weight ratio of small to large rubber particles, wherein the large particles have a volume average particle size of about 2.1 micrometers and the small particles have a volume average particle size of about 0.3 micrometers.

A bimodal composition is prepared using a single reactor to produce a prepolymer composition having rubber particles of a volume average particle size of about 2.1 micrometers, and to combine the prepolymer composition with a second prepolymer composition containing rubber particles having a volume average particle size of about 0.3 micrometers.

## Claims

1. A continuous process for the production of a rubber-reinforced polymer composition comprising:
continuously polymerizing a vinyl aromatic monomer containing a dissolved rubber to a conversion of from 2 to 70 percent, in a first substantially plug flow reactor to produce a first prepolymer composition containing rubber particles,
continuously introducing a second prepolymer composition containing rubber particles into the first substantially plug flow reactor at a point in the reactor wherein phase inversion of the first prepolymer composition has occurred, such that the second prepolymer composition and the first prepolymer composition are mixed in the first substantially plug flow reactor thus forming a third prepolymer composition,
and further polymerizing the third prepolymer composition, to produce a rubber-reinforced polymer composition.

2. A continuous process for the production of a rubber-reinforced polymer composition having a bimodal particle size distribution comprising:
continuously polymerizing a vinyl aromatic monomer containing a dissolved rubber to a conversion of from 2 to 70 percent, in a first substantially plug flow reactor to produce a first prepolymer composition containing rubber particles,
continuously introducing a second prepolymer composition containing rubber particles into the first substantially plug flow reactor at a point in the reactor wherein phase inversion of the first prepolymer composition has occurred, such that the second prepolymer composition and the first prepolymer composition are mixed, thus forming a third prepolymer composition,
wherein one of the prepolymer compositions contains small rubber particles having a volume average particle size of from 0.05 to 1.5 micrometers, and the other prepolymer composition contains large rubber particles having a volume average particle size of from 0.7 to 10 micrometers, with the proviso that the volume average particle size of the large rubber particles is at least 1.3 times the volume average particle size of the small rubber particles,
and further polymerizing the third prepolymer composition, to produce a rubber-reinforced polymer composition.

3. The process of Claim 1 or 2 wherein the vinyl aromatic monomer is styrene.

4. The process of Claim 1 or 2 wherein the rubber is a homopolymer or copolymer of an alkadiene, an ethylene-propylene copolymer or an ethylene-propylene copolymer containing a non-conjugated diene.

5. The process of Claim 4 wherein the rubber is a homopolymer of an alkadiene.

6. The process of Claim 5 wherein the rubber is a homopolymer of butadiene, isoprene, piperylene, or chloroprene.

7. The process of Claim 1 or 2 wnerein the rubber is a copolymer of a conjugated diene and one or more vinyl aromatic monomers.

8. The process of Claim 7 wherein the rubber is a copolymer of butadiene and styrene.

9. The process of Claim 1 or 2 wherein the rubber-reinforced polymer composition is a HIPS composition.

10. The process of Claim 1 or 2 wherein the rubber-reinforced polymer composition is an ABS composition.

11. The process of Claim 2 wherein the small rubber particles are present in the second prepolymer composition and the large rubber particles are present in the first prepolymer composition.

12. The process of Claim 2 wherein the small particles have an average particle size of from about 0.05 to about 1.5 micrometers and the large particles have an average particle size of from about 0.7 to about 10 micrometers.

## Patentansprüche

1. Kontinuierliches Verfahren für die Herstellung einer kautschukverstärkten Polymerzusammensetzung, umfassend:
kontinuierlich Polymerisieren eines aromatischen Vinylmonomers, das einen aufgelösten Kautschuk enthält, bis zu einem Umsatz von 2 bis 70 % in einem ersten Reaktor mit im wesentlichen Pfropfenströmung, um eine erste Vorpolymerzusammensetzung herzustellen, die Kautschukteilchen enthält,
kontinuierliches Einführen einer zweiten Vorpolymerzusammensetzung, die Kautschukteilchen enthält, in den ersten Reaktor mit im wesentlichen Pfropfenströmung an einem Punkt im Reaktor, bei dem Phasenumkehr der ersten Vorpolymerzusammensetzung stattgefunden hat, so daß die zweite Vorpolymerzusammensetzung und die erste Vorpolymerzusammensetzung in dem ersten Reaktor mit im wesentlichen Pfropfenströmung vermischt werden und dadurch eine dritte Vorpolymerzusammensetzung gebildet wird,
und weiter Polymerisieren der dritten Vorpolymerzusammensetzung, um eine kautschukverstärkte Polymerzusammensetzung herzustellen.

2. Kontinuierliches Verfahren für die Herstellung einer kautschukverstärkten Polymerzusammensetzung mit einer bimodalen Teilchengrößenverteilung, umfassend:
kontinuierlich Polymerisieren eines aromatischen Vinylmonomers, das einen aufgelösten Kautschuk enthält, bis zu einem Umsatz von 2 bis 70 % in einem ersten Reaktor mit im wesentlichen Pfropfenströmung, um eine erste Vorpolymerzusammensetzung herzustellen, die Kautschukteilchen enthält.
kontinuierliches Einführen einer zweiten Vorpolymerzusammensetzung, die Kautschukteilchen enthält, in den ersten Reaktor mit im wesentlichen Pfropfenströmung an einem Punkt im Reaktor, bei dem Phasenumkehr der ersten Vorpolymerzusammensetzung stattgefunden hat, so daß die zweite Vorpolymerzusammensetzung und die erste Vorpolymerzusammensetzung vermischt werden und dadurch eine dritte Vorpolymerzusammensetzung gebildet wird,
wobei eine der Vorpolymerzusammensetzungen kleine Kautschukteilchen mit einer volumenmittleren Teilchengröße von 0,05 bis 1,5 µm enthält und die andere Vorpolymerzusammensetzung große Kautschukteilchen mit einer volumenmittleren Teilchengröße von 0,7 bis 10 µm enthält, unter der Voraussetzung, daß die volumenmittlere Teilchengröße der großen Kautschukteilchen wenigstens 1,3 mal größer ist als die volumenmittlere Teilchengröße der kleinen Kautschukteilchen,
und weiter Polymerisieren der dritten Vorpolymerzusammensetzung, um eine kautschukverstärkte Polymerzusammensetzung herzustellen.

3. Verfahren nach Anspruch 1 oder 2, wobei das aromatische Vinylmonomer Styrol ist.

4. Verfahren nach Anspruch 1 oder 2, wobei der Kautschuk ein Homopolymer oder Copolymer eines Alkadiens, eines Ethylen/ Propylen-Copolymers oder eines Ethylen/Propylen-Copolymers mit nichtkonjugiertem Dien ist.

5. Verfahren nach Anspruch 4, wobei der Kautschuk ein Homopolymer eines Alkadiens ist.

6. Verfahren nach Anspruch 5, wobei der Kautschuk ein Homopolymer von Butadien, Isopren, Piperylen oder Chloropren ist.

7. Verfahren nach Anspruch 1 oder 2, wobei der Kautschuk ein Copolymer eines konjugierten Diens und eines oder mehrerer aromatischer Vinylmonomere ist.

8. Verfahren nach Anspruch 7, wobei der Kautschuk ein Copolymer von Butadien und Styrol ist.

9. Verfahren nach Anspruch 1 oder 2, wobei die kautschukverstärkte Polymerzusammensetzung eine HIPS-Zusammensetzung ist.

10. Verfahren nach Anspruch 1 oder 2, wobei die kautschukverstärkte Polymerzusammensetzung eine ABS-Zusammensetzung ist.

11. Verfahren nach Anspruch 2, wobei die kleinen Kautschukteilchen in der zweiten Vorpolymerzusammensetzung vorhanden sind und die großen Kautschukteilchen in der ersten Vorpolymerzusammensetzung vorhanden sind.

12. Verfahren nach Anspruch 2, wobei die kleinen Teilchen eine mittlere Teilchengröße von ungefähr 0,05 bis ungefähr 1,5 um aufweisen und die großen Teilchen eine mittlere Teilchengröße von ungefähr 0,7 bis ungefähr 10 µm aufweisen.

## Revendications

1. Procédé continu de production d'une composition de polymère renforcée par un caoutchouc comprenant :
la polymérisation en continu d'un monomère vinylaromatique contenant un caoutchouc dispersé jusqu'à un taux de conversion de 2 à 70 %, dans un premier réacteur essentiellement à écoulement idéal de façon à produire une première composition de prépolymère contenant des particules de caoutchouc,
l'introduction en continu d'une deuxième composition de prépolymère contenant des particules de caoutchouc dans le premier réacteur essentiellement à écoulement idéal, en un point dans le réacteur où une inversion de phases de la première composition de prépolymère a eu lieu, de sorte que la deuxième composition de prépolymère et la première composition de prépolymère soient mélangées dans le premier réacteur essentiellement à écoulement idéal formant ainsi une troisième composition de prépolymère,
et la polymérisation plus poussée de la troisième composition de prépolymère, pour produire une composition de polymère renforcée par un caoutchouc.

2. Procédé continu de production d'une composition de polymère renforcée par un caoutchouc ayant une distribution de tailles de particule bimodale comprenant :
la polymérisation en continu d'un monomère vinylaromatique contenant un caoutchouc dispersé jusqu'à un taux de conversion de 2 à 70 %, dans un premier réacteur essentiellement à écoulement idéal de façon à produire une première composition de prépolymère contenant des particules de caoutchouc,
l'introduction en continu d'une deuxième composition de prépolymère contenant des particules de caoutchouc dans le premier réacteur essentiellement à écoulement idéal, en un point dans le réacteur où une inversion de phases de la première composition de prépolymère a eu lieu, de sorte que la deuxième composition de prépolymère et la première composition de prépolymère soient mélangées formant ainsi une troisième composition de prépolymère,
dans lequel l'une des compositions de prépolymère contient de petites particules de caoutchouc ayant une taille de particule moyenne en volume de 0,05 à 1,5 micromètre, et l'autre composition de prépolymère contient de grosses particules de caoutchouc ayant une taille de particule moyenne en volume de 0,7 à 10 micromètres, à condition que la taille de particule moyenne en volume des grosses particules de caoutchouc soit au moins 1,3 fois la taille de particule moyenne en volume des petites particules de caoutchouc,
et la polymérisation plus poussée de la troisième composition de prépolymère, pour produire une composition de polymère renforcée par un caoutchouc.

3. Procédé selon la revendication 1 ou 2, dans lequel le monomère vinylaromatique est le styrène.

4. Procédé selon la revendication 1 ou 2, dans lequel le caoutchouc est un homopolymère ou un copolymère d'un alcadiène, un copolymère éthylène-propylène ou un copolymère éthylène-propylène contenant un diène non conjugué.

5. Procédé selon la revendication 4, dans lequel le caoutchouc est un homopolymère d'un alcadiène.

6. Procédé selon la revendication 5, dans lequel le caoutchouc est un homopolymère de butadiène, d'isoprène, de pipérylène ou de chloroprène.

7. Procédé selon la revendication 1 ou 2, dans lequel le caoutchouc est un copolymère d'un diène conjugué et d'un ou de plusieurs monomères vinylaromatiques.

8. Procédé selon la revendication 7, dans lequel le caoutchouc est un copolymère de butadiène et de styrène.

9. Procédé selon la revendication 1 ou 2, dans lequel la composition de polymère renforcée par un caoutchouc est une composition de HIPS.

10. Procédé selon la revendication 1 ou 2, dans lequel la composition de polymère renforcée par un caoutchouc est une composition d'ABS.

11. Procédé selon la revendication 2, dans lequel les petites particules de caoutchouc sont présentes dans la deuxième composition de prépolymère et les grosses particules de caoutchouc sont présentes dans la première composition de prépolymère.

12. Procédé selon la revendication 2, dans lequel les petites particules ont une taille de particule moyenne d'environ 0,05 à environ 1,5 micromètre et les grosses particules ont une taille de particule moyenne d'environ 0,7 à environ 10 micromètres.
